# DEMANDE DE BREVET EUROPEEN

(11) **EP 1 505 755 A1**
(43) Date de publication de la demande: **09.02.2005**
(21) Numéro de dépôt: 04291701.3
(22) Date de dépôt: 05.07.2004
(51) Int. Cl.: H04J 14/02, H04Q 3/00, H04Q 11/00

(54) **Procédé et dispositif de contrôle des chemins de protection ou de restauration dans un réseau optique hybride**

(30) Priorité: 08.08.2003 US 636530
(71) Demandeur: ALCATEL, 75008 Paris (FR)
(72) Inventeur: Vigoreux, Martin, 75015 Paris (FR); Ali, Maher, Plano, Texas 75023 (US); Audouin, Olivier, 91160 Longjumeau (FR); Dotaro, Emmanuel, 91370 Verrières le Buisson (FR); Douville, Richard, 91220 Bretigny sur Orge (FR); Elie Dit Cosaque, David, Richardson, TX 75080 (US)
(74) Mandataire: Fournier, Michel Robert Marie

(57) **Abrégé**

Un dispositif (D) est dédié au contrôle de chemins auxiliaires dans un réseau de communications optique de type hybride comportant des noeuds hybrides (NO) comprenant des moyens de commutation (CM1) et des moyens de conversion de couleurs (CM2), ces noeuds étant raccordés entre eux par des lignes de transmission. Ce dispositif (D) comprend des moyens de traitement (MT) agencés, en cas de défaut sur l'une au moins des lignes de transmission par laquelle passe une connexion aux extrémités de laquelle sont placés deux noeuds hybrides (NO) aptes à effectuer une commutation selon le mode opaque, pour ordonner aux moyens de commutation (CM1) de l'un au moins de ces noeuds hybrides (NO) qu'ils commutent les signaux optiques qui empruntent la connexion vers un chemin auxiliaire choisi, passant par ces noeuds et indépendant de la couleur, après une éventuelle conversion de couleur des signaux optiques par les moyens de conversion (CM2) associés.

## Description

L'invention concerne le domaine des réseaux de transport optique à multiplexage de longueur d'onde, et plus particulièrement le contrôle des chemins de protection et de restauration au sein de réseaux optiques dits hybrides.

On entend ici par « réseau optique hybride » un réseau de communications comportant des noeuds hybrides, raccordés entre eux par des lignes de transmission. Par ailleurs, on entend par « hybride » le fait qu'un noeud puisse commuter un signal optique soit selon un mode transparent, soit selon un mode opaque. Un signal optique est dit « commuté selon un mode transparent », lorsqu'il ne passe pas au travers d'un module opto-électronique (O/E) ou d'un module de conversion de longueur d'onde tout optique. Un signal optique est dit « commuté selon un mode opaque » lorsqu'il traverse un module opto-électronique ou un module de conversion de longueur d'onde tout optique.

Dans ces réseaux optiques, il est possible d'utiliser des chemins de protection prédéterminés (c'est-à-dire précalculés, préétablis et préréservés), ou des chemins de restauration partiellement déterminés ou à déterminer, pour assurer la protection ou la restauration du trafic en cas de défaut survenu sur une ligne de transmission, par laquelle passe une connexion empruntée par des signaux optiques, et de nature à dégrader, voire empêcher, la transmission d'au moins l'un des signaux optiques passant par cette ligne.

Ces chemins de protection ou de restauration, que l'on appellera ci-après chemins « auxiliaires », sont soit établis entre les deux noeuds placés aux extrémités d'une connexion, sans passer par les noeuds intermédiaires hybrides et/ou les lignes de transmission (ou liens) qu'emprunte cette connexion, conformément à un mode appelé « de bout-en-bout » (ou « end-to-end »), soit décomposés en sous-chemins établis entre des couples de noeuds de la connexion, conformément à un mode appelé soit « sous-chemin » (ou « sub-path ») lorsque le sous-chemin relie des noeuds qui ne sont pas adjacents, soit « lien » (ou « link ») si le sous-chemin relie deux noeuds adjacents.

Le mécanisme de protection ou de restauration sous-tend la commutation du signal optique vers (et depuis) le (sous-)chemin auxiliaire. Si cette commutation est réalisée selon un mode transparent, les chemins et sous-chemins auxiliaires passant par les noeuds réalisant la commutation doivent donc être déterminés non seulement en fonction d'un critère de disponibilité mais également en fonction d'un critère de couleur (ou longueur d'onde).

L'invention a donc pour but de remédier à cet inconvénient.

Elle propose à cet effet un procédé de contrôle de (sous-)chemins auxiliaires dans un réseau optique hybride comportant une multiplicité de noeuds hybrides, raccordés entre eux par des lignes de transmission. Les connexions établies dans le réseau traversent celui-ci en étant commutées au sein de certains noeuds selon un mode transparent et au sein d'autres noeuds selon un mode opaque, et ce pour des besoins de régénération du signal optique qui se dégrade naturellement lors de sa traversée du réseau.

Le nombre de modules permettant la conversion de longueur d'onde (module opto-électronique ou module de conversion tout optique) étant limité au sein des noeuds hybrides et donc globalement dans le réseau, le procédé selon l'invention se caractérise par le fait qu'il consiste, lorsque survient un défaut sur une ligne de transmission par laquelle passe(nt) une ou plusieurs connexions, à déterminer tout d'abord les (sous-)chemins auxiliaires entre les noeuds au sein desquels une connexion peut-être commutée selon un mode opaque (qu'elle le soit déjà ou pas), puis, à commuter le ou les signaux optiques, impactés par le défaut intervenu sur la ligne de transmission, vers un (sous-)chemin auxiliaire, défini entre deux noeuds hybrides à commutation en mode opaque, placés aux extrémités de cette ligne défaillante, après une éventuelle conversion de la couleur des signaux optiques.

Seuls les noeuds hybrides, capables de commuter selon un mode opaque, servant désormais à la commutation des signaux optiques vers les (sous-)chemins auxiliaires, après une éventuelle conversion de couleur, lorsque survient un défaut sur une ligne de transmission par laquelle passe une connexion, lesdits (sous-)chemins peuvent donc être déterminés indépendamment de la couleur des signaux optiques qui empruntent la connexion.

Préférentiellement, on ne procède à la commutation des signaux optiques qu'après avoir reçu une information signalant l'apparition d'un défaut sur la ligne de transmission par laquelle passe la connexion qu'ils empruntent.

Lorsque le (sous-)chemin auxiliaire est destiné à la restauration de trafic, il est préférentiellement déterminé à réception de l'information de signalisation de défaut. De même, lorsque le (sous-)chemin auxiliaire est destiné à la restauration de trafic et qu'il était partiellement prédéterminé avant la réception de l'information de signalisation de défaut, on achève de le déterminer à réception dudit message. Cette détermination ou prédétermination est préférentiellement effectuée dans le noeud hybride (responsable de la commutation) en amont de la panne (par rapport au sens de propagation du signal optique), mais elle peut être également effectuée dans un serveur de gestion couplé auxdits noeuds hybrides.

En revanche, lorsque le (sous-)chemin auxiliaire est destiné à la protection de trafic, la commutation des signaux optiques du flux optique reçu est effectuée automatiquement à réception de l'information de signalisation de défaut.

L'invention porte également sur un dispositif de contrôle de (sous-) chemins auxiliaires dans un réseau optique hybride comportant une multiplicité de noeuds hybrides, comprenant des moyens de commutation de signaux optiques et des moyens de conversion de couleur et raccordés entre eux par des lignes de transmission.

Ce dispositif se caractérise par le fait qu'il comprend des moyens de traitement chargés, lorsque survient un défaut sur une ligne de transmission par laquelle passe une ou plusieurs connexions et aux extrémités de laquelle sont placés deux noeuds aptes à effectuer une commutation selon le mode opaque, d'ordonner aux moyens de commutation de l'un au moins de ces deux noeuds hybrides qu'ils commutent les signaux optiques vers un (sous-) chemin auxiliaire choisi passant par eux et indépendant de la couleur, après une éventuelle conversion de couleur par les moyens de conversion associés.

Préférentiellement, les moyens de traitement sont agencés de manière à ordonner la commutation des signaux optiques du flux à réception d'une information (ou message) signalant le défaut sur la ligne de transmission par laquelle passe la connexion qu'ils empruntent.

Lorsque le (sous-)chemin auxiliaire est destiné à la restauration de trafic, le dispositif comporte de préférence des moyens de calcul chargés de le déterminer à réception de l'information de signalisation de défaut. De même, lorsque le (sous-)chemin auxiliaire est destiné à la restauration de trafic et qu'il était partiellement prédéterminé avant la réception de l'information de signalisation de défaut, les moyens de calcul sont préférentiellement chargés d'en achever la détermination à réception de ladite information.

En revanche, lorsque le (sous-)chemin auxiliaire est destiné à la protection de trafic, les moyens de traitement ordonnent automatiquement la commutation du flux optique reçu dès qu'ils reçoivent l'information de signalisation de défaut.

Un tel dispositif de contrôle peut être implanté dans un serveur de gestion d'un réseau optique hybride ou dans des noeuds hybrides de ce réseau, qui peuvent en outre être équipés d'un module de régénération de signaux optiques.

Par ailleurs, l'invention s'applique à tous les types de réseaux optiques hybrides, et notamment aux réseaux à commutation de longueurs d'onde, les réseaux à commutation de bandes de longueurs d'onde et les réseaux fibrés.

D'autres caractéristiques et avantages de l'invention apparaîtront à l'examen de la description détaillée ci-après, et des dessins annexés sur lesquels :
- la figure 1 illustre de façon schématique un exemple de ligne de transmission selon l'invention, appartenant à un réseau optique hybride et associée à un chemin de protection établi conformément à un mode de type « de bout-en-bout » (ou « end-to-end »),
- la figure 2 illustre de façon schématique un exemple de ligne de transmission selon l'invention, appartenant à un réseau optique hybride et associée à un chemin de protection établi conformément à un mode de type « sous-chemin », et
- la figure 3 illustre de façon schématique un exemple de réalisation d'un dispositif de contrôle selon l'invention, implanté dans un noeud hybride.

Ces figures pourront non seulement servir à compléter l'invention, mais aussi contribuer à sa définition, le cas échéant.

Un réseau de communications optique de type hybride peut être représenté, de façon très schématique, par une multiplicité de terminaux de transmission raccordés entre eux par des lignes de transmission. On entend ici par « terminal de transmission » tout terminal constituant un noeud du réseau, qu'il soit de type « transparent », du fait qu'il n'assure la commutation de flux qu'à couleur constante (longueur d'onde ou bande de longueur d'onde), c'est-à-dire sans conversion de couleur, ou du type « hybride », du fait qu'il assure au moins la commutation de signaux optiques de flux, avec ou sans conversion de couleur, ou la régénération des signaux optiques.

Une connexion traditionnelle, également appelée connexion de travail (ou « working ressources »), est généralement établie à travers une suite de noeuds hybrides reliés entre eux par des lignes de transmission. Cette connexion est généralement commutée selon un mode transparent au sein de certains noeuds et commutée selon un mode opaque au sein d'autres noeuds.

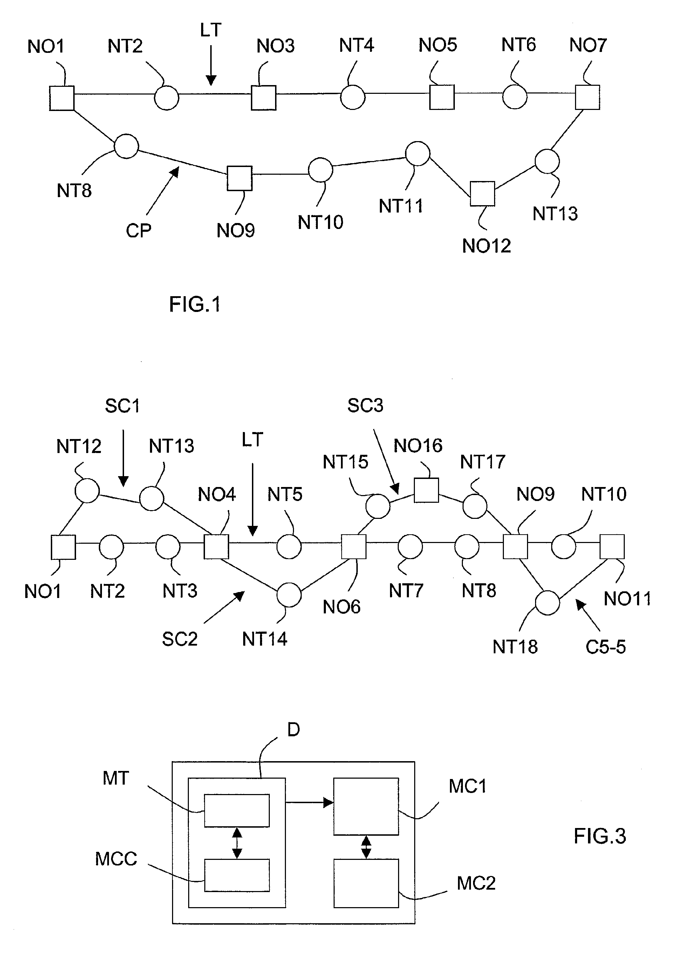

Comme cela est illustré sur la figure 1, le chemin emprunté par une connexion de travail LT, selon l'invention, comporte au niveau de ses deux extrémités opposées des noeuds hybrides NO1 et NO7 équipés au moins d'un module de commutation de flux et d'un module de conversion de couleur, assurant éventuellement la régénération des signaux optiques, et raccordés à des noeuds intermédiaires où la commutation de ladite connexion est réalisée selon un mode transparent (ici NT2, NT4 et NT6) ou opaque (ici NO3 et NO5). Les noeuds assurant la commutation opaque sont équipés d'un module de conversion, assurant éventuellement la régénération des signaux optiques.

La régénération des signaux optiques (ou régénération de flux) peut être par exemple de type 2R (pour « Réamplification et Remise en forme ») ou 3R (pour « Réamplification, Remise en forme et Resynchronisation »).

Afin de permettre la protection du trafic ou la restauration du trafic lorsqu'un défaut survient sur une ligne de transmission le long du chemin LT par lequel passe une connexion, cette ligne de transmission défaillante est associée à un chemin de protection ou de restauration CP. On entend ici par « chemin de protection » un chemin de transmission dont les ressources ont été précalculées, préétablies et préréservées, par opposition à un « chemin de restauration » dont les ressources ont été partiellement déterminées ou doivent être déterminées pour assurer la protection ou la restauration du trafic en cas de défaut survenu sur une ligne de transmission. Par ailleurs, on entend par « chemin auxiliaire » aussi bien un chemin de protection qu'un chemin de restauration.

Trois types de chemin auxiliaire CP peuvent être envisagés. Dans un premier type, dit « de bout-en-bout » (ou « end-to-end »), illustré sur la figure 1, le chemin auxiliaire CP relie les deux noeuds d'extrémité NO1 et NO7 du chemin LT, sans passer par ses noeuds intermédiaires. Dans l'exemple illustré, le chemin auxiliaire CP comprend des noeuds hybrides NO où la commutation de la connexion considérée est réalisée selon un mode opaque (noeuds d'extrémité NO1 et NO7, et noeuds intermédiaires NO9 et NO12) et des noeuds hybrides où la commutation de ladite connexion est réalisée selon un mode transparent (noeuds intermédiaires NT8, NT10, NT11 et NT13).

Dans un deuxième type, dit « sous-chemin », illustré sur la figure 2, le chemin auxiliaire CP relie toujours les deux noeuds d'extrémité NO1 et NO11 du chemin LT, mais il est désormais subdivisé en sous-chemins auxiliaires (ici SC1, SC2, SC3 et SC4) passant par des noeuds intermédiaires du chemin LT, où la commutation des connexions principale et de secours est réalisée selon un mode opaque (ici NO4, NO6 et NO9). Plus précisément, chaque sous-chemin auxiliaire SC est défini entre deux noeuds hybrides, équipés au moins d'un module de commutation de flux et d'un module de conversion de couleur assurant éventuellement la régénération des signaux optiques.

Ainsi, dans l'exemple illustré, le premier sous-chemin SC1 relie les noeuds NO1 et NO4 où la commutation des connexions principale et de secours est réalisée selon un mode opaque en passant par les noeuds NT12 et NT13, où la commutation de la connexion de secours est réalisée selon un mode transparent, le deuxième sous-chemin SC2 relie les noeuds NO4 et NO6, où la commutation des connexions principale et de secours est réalisée selon un mode opaque, en passant par le noeud NT14, où la commutation de la connexion de secours est réalisée selon un mode transparent, le troisième sous-chemin SC3 relie les noeuds NO6 et NO9, où la commutation des connexions principale et de secours est réalisée selon un mode opaque, en passant par les noeuds NT15 et NT17, où la commutation de la connexion de secours est réalisée selon un mode transparent, et par le noeud NO16 où la commutation de la connexion de secours est réalisée selon un mode opaque, et le quatrième sous-chemin SC4 relie les noeuds NO9 et NO11, où la commutation des connexions principale et de secours est réalisée selon un mode opaque, en passant par le noeud transparent NT18, où la commutation de la connexion de secours est réalisée selon un mode transparent.

Dans ce deuxième type de chemin de protection, le chemin emprunté par la connexion principale peut donc être décomposé en portions (ou sous-chemins) défini(e)s chacun(e) entre deux de ses noeuds hybrides NO, où la commutation de la connexion principale est réalisée selon un mode opaque et qui sont raccordés entre eux par un sous-chemin auxiliaire SC.

Le troisième type, dit « lien » (ou link »), est une variante du deuxième type dans laquelle le sous-chemin (ou lien) est défini entre deux noeuds adjacents de la connexion considérée.

Grâce à l'agencement proposé par l'invention, ce sont donc des noeuds NO, aptes à la conversion de couleur et à la commutation de flux, qui sont chargés d'assurer la commutation des flux qu'ils reçoivent vers le chemin auxiliaire CP auquel ils sont respectivement raccordés, lorsque survient un défaut sur la ligne de transmission à laquelle ils appartiennent et par laquelle passe(nt) une ou plusieurs connexions. Ainsi, chaque chemin ou sous-chemin auxiliaire peut être déterminé indépendamment de la couleur des signaux optiques qui circulent sur le chemin LT.

Préférentiellement, la commutation d'un flux reçu au niveau d'un noeud NO est effectuée après réception d'une information (ou message) signalant un défaut sur une ligne de transmission le long du chemin emprunté par la connexion principale. Cette information peut provenir d'un serveur de gestion du réseau (non représenté), couplé aux différents noeuds du réseau, ou bien de tout autre noeud, mais préférentiellement le noeud le plus proche de la ligne de transmission défaillante et disposant de moyens de détection de ce type de panne.

La mise en oeuvre de l'invention peut s'effectuer de deux manières selon le type de protection ou restauration offert par le réseau.

Une première manière, adaptée à la protection ou restauration de type « end-to-end », consiste à équiper chaque ligne de transmission LT d'au moins deux noeuds hybrides d'extrémité équipés d'au moins un module de conversion de couleur, assurant éventuellement la régénération des signaux optiques, couplé à un module de commutation de flux.

Lorsque le réseau fonctionne en mode « protection de trafic », les chemins de protection CP sont prédéterminés, par exemple par un serveur de gestion du réseau ou par le noeud à l'extrémité amont d'un (sous-)chemin protégé qui est alors équipé d'un module de calcul de chemin auxiliaire. Dans ce cas, lorsque qu'un noeud hybride d'extrémité reçoit une information de signalisation de défaut du serveur de gestion ou du noeud ayant détecté la panne, plusieurs situations peuvent être envisagées selon le niveau de protection du réseau. Certaines de ces situations sont répertoriées de façon non exhaustive ci-après.

Dans toutes les situations suivantes au moins les deux noeuds hybrides NO, placés aux extrémités du (sous-)chemin principal qui comporte la ligne de transmission défaillante, doit commuter: celui en amont pour émettre le signal sur la ressource de protection et celui en aval pour recevoir ce signal depuis la ressource de protection.

Une première situation concerne le niveau de protection dit « 1 + 1 » dans lequel on transmet les signaux sur le chemin principal et des signaux dupliqués sur le chemin de protection CP associé. Dans cette situation, c'est donc au niveau du noeud hybride d'extrémité aval que s'effectue la commutation des flux issus du chemin de protection CP.

Une deuxième situation concerne le niveau de protection dit « 1 : 1 » dans lequel on transmet les signaux le long d'un chemin principal et on commute les signaux sur le chemin de protection CP associé, en cas de défaut sur une ligne de transmission du chemin principal. Dans cette situation, c'est donc le noeud hybride d'extrémité amont qui configure son module de commutation à réception de l'information de signalisation de défaut, de sorte que chaque flux reçu soit automatiquement commuté vers le chemin de protection CP, mais le noeud d'extrémité aval doit également commuter depuis la ressource de transport des signaux du chemin principal vers la ressource de transport des signaux du chemin de protection.

Une troisième situation concerne le niveau de protection dit « 1 : N » dans lequel on transmet les signaux sur le chemin principal et on commute les signaux sur un chemin de protection CP associé à N connexions différentes, en cas de défaut sur une ligne de transmission le long du chemin principal. Dans cette situation, c'est également le noeud hybride d'extrémité amont qui configure son module de commutation à réception de l'information de signalisation de défaut, de sorte que chaque flux reçu soit automatiquement commuté vers le chemin de protection CP, mais le noeud d'extrémité aval doit également commuter depuis la ressource de transport des signaux du chemin principal vers la ressource de transport des signaux du chemin de protection.

Lorsque le réseau fonctionne en mode « restauration de trafic », les chemin de restauration CP sont soit partiellement prédéterminés, soit à déterminer, par exemple par un serveur de gestion du réseau ou par l'un au moins des noeuds hybrides d'extrémité (et de préférence, le noeud amont) de chaque ligne de transmission LT, qui est alors équipé d'un module de calcul de chemin auxiliaire. Dans ce cas, soit le noeud hybride d'extrémité reçoit les informations définissant le chemin de restauration CP du serveur de gestion et l'information de signalisation de défaut du serveur de gestion ou du noeud hybride d'extrémité opposé, soit il reçoit l'information de signalisation de défaut du serveur de gestion ou du noeud hybride d'extrémité aval puis détermine ou achève de déterminer le chemin de restauration CP. Les trois situations évoquées précédemment demeurent, selon le niveau de protection du réseau.

Dans la deuxième situation, concernant le niveau de protection « 1 : 1 », c'est le noeud hybride d'extrémité amont qui configure son module de commutation à réception de l'information de signalisation de défaut et après que le chemin de restauration CP ait été intégralement déterminé, de sorte que chaque flux reçu soit automatiquement commuté vers le chemin de restauration CP, mais le noeud d'extrémité aval doit également commuter depuis la ressource de transport des signaux du chemin principal vers la ressource de transport des signaux du chemin de protection.

Dans la troisième situation, concernant le niveau de protection « 1 : N », c'est également le noeud hybride d'extrémité amont qui configure son module de commutation à réception de l'information de signalisation de défaut et après que le chemin de restauration CP ait été intégralement déterminé, de sorte que chaque flux reçu soit automatiquement commuté vers le chemin de restauration CP, mais le noeud d'extrémité aval doit également commuter depuis la ressource de transport des signaux du chemin principal vers la ressource de transport des signaux du chemin de protection.

Une seconde manière, adaptée à la protection ou restauration de type « sous-chemin», consiste à équiper chaque ligne de transmission LT de deux noeuds d'extrémité hybrides et d'au moins un noeud hybride intermédiaire, équipés chacun d'au moins un module de conversion de couleur, assurant éventuellement la régénération des signaux optiques, couplé à un module de commutation de flux.

Lorsque le réseau fonctionne en mode « protection de trafic », les sous-chemins de protection SC sont prédéterminés, par exemple par un serveur de gestion du réseau ou par le noeud à l'extrémité amont d'un (sous-) chemin SC protégé qui est alors équipé d'un module de calcul de chemin auxiliaire. Dans ce cas, lorsqu'un noeud hybride d'extrémité reçoit une information de signalisation de défaut du serveur de gestion ou du noeud ayant détecté la panne, les trois situations précédemment évoquées doivent être envisagées, selon le niveau de protection du réseau.

Dans la première situation, concernant le niveau de protection « 1 + 1 », c'est donc au niveau du noeud hybride placé à l'extrémité aval de la ligne de transmission défaillante du chemin principal que s'effectue la commutation des signaux optiques issus du sous-chemin de protection SC concerné.

Dans la deuxième situation, concernant le niveau de protection « 1 : 1 », c'est le noeud hybride placé à l'extrémité amont de la ligne de transmission défaillante du chemin principal qui configure son module de commutation à réception de l'information de signalisation de défaut, de sorte que chaque flux reçu soit automatiquement commuté vers le sous-chemin de protection SC concerné, mais le noeud d'extrémité aval doit également commuter depuis la ressource de transport des signaux du chemin principal vers la ressource de transport des signaux du sous-chemin de protection.

Dans la troisième situation, concernant le niveau de protection « 1 : N », c'est également le noeud hybride d'extrémité amont qui configure son module de commutation à réception de l'information de signalisation de défaut, de sorte que chaque flux reçu soit automatiquement commuté vers le sous-chemin de protection SC concerné, mais le noeud d'extrémité aval doit également commuter depuis la ressource de transport des signaux du chemin principal vers la ressource de transport des signaux du sous-chemin de protection.

Lorsque le réseau fonctionne en mode « restauration de trafic », les sous-chemins de restauration SC sont soit partiellement prédéterminés, soit à déterminer, par exemple par un serveur de gestion du réseau ou par chaque noeud hybride d'extrémité ou intermédiaire placé à l'extrémité d'un sous-chemin SC (et de préférence, lorsqu'il est placé en amont du défaut) et équipé à cet effet d'un module de calcul de chemin auxiliaire. Dans ce cas, soit le noeud hybride d'extrémité ou intermédiaire reçoit les informations définissant le sous-chemin de restauration SC du serveur de gestion et l'information de signalisation de défaut du serveur de gestion ou du noeud hybride placé à l'extrémité opposée de la ligne de transmission défaillante, soit il reçoit l'information de signalisation de défaut du serveur de gestion ou du noeud hybride placé à l'extrémité opposée de la ligne de transmission défaillante puis détermine ou achève de déterminer le sous-chemin de restauration SC. Les trois situations évoquées précédemment demeurent, selon le niveau de protection du réseau.

Dans la première situation, concernant le niveau de protection « 1 + 1 », c'est toujours le noeud hybride placé à l'extrémité aval de la ligne de transmission défaillante qui effectue la commutation des flux issus du sous-chemin de restauration SC une fois que ce sous-chemin de restauration SC a été intégralement déterminé.

Dans la deuxième situation, concernant le niveau de protection « 1 : 1 », c'est le noeud hybride placé à l'extrémité amont de la ligne de transmission défaillante qui configure son module de commutation à réception de l'information de signalisation de défaut et après que le sous-chemin de restauration SC ait été intégralement déterminé, de sorte que chaque flux reçu soit automatiquement commuté vers le sous-chemin de restauration SC concerné, mais le noeud d'extrémité aval doit également commuter depuis la ressource de transport des signaux du chemin principal vers la ressource de transport des signaux du sous-chemin de protection.

Dans la troisième situation, concernant le niveau de protection « 1 : N », c'est également le noeud hybride placé à l'extrémité amont de la ligne de transmission défaillante qui configure son module de commutation à réception de l'information de signalisation de défaut et après que le sous-chemin de restauration SC ait été intégralement déterminé, de sorte que chaque flux reçu soit automatiquement commuté vers le sous-chemin de restauration SP concerné, mais le noeud d'extrémité aval doit également commuter depuis la ressource de transport des signaux du chemin principal vers la ressource de transport des signaux du chemin de protection.

Sur la figure 3 se trouve illustré, de façon très schématique, un noeud hybride NO, apte à la commutation en mode opaque, équipé d'un exemple de dispositif D de contrôle de chemin auxiliaire selon l'invention.

Comme indiqué précédemment, un tel noeud hybride NO selon l'invention est au moins équipé d'un module de commutation de flux MC1 couplé à un module de conversion de couleur MC2 assurant éventuellement la régénération des signaux optiques, par exemple de type 2R ou 3R.

Il est important de noter que l'on peut partir d'un noeud hybride muni simplement d'un module de régénération des signaux optiques et que l'on équipe d'un module de commutation de flux MC1 et d'un module de conversion de couleur MC2.

Dans cet exemple, le dispositif de contrôle D du noeud hybride NO est également adapté à la détermination de chemin CP ou sous-chemin SC auxiliaire. Dans ce cas, le dispositif D comprend un module de traitement MT couplé à un module de calcul de chemin MCC.

Le module de calcul de chemin MCC est chargé de déterminer un chemin ou sous-chemin auxiliaire indépendant de la couleur soit à l'avance dans le cas de la protection de trafic, soit à réception d'une information de signalisation de défaut dans le cas de la restauration de trafic.

Le module de traitement MT est chargé d'ordonner au module de commutation MC1, lorsqu'il reçoit une information (ou un message) de signalisation de défaut, de commuter chaque flux optique reçu par le noeud hybride NO dans lequel il est implanté, soit vers le chemin CP ou sous-chemin SC auxiliaire auquel est raccordé ce noeud hybride NO (dans les situations « 1 : 1 » et « 1 : N »), soit du chemin CP ou sous-chemin SC auxiliaire (dans la situation « 1 +1 »).

Lorsque cela s'avère nécessaire, la commutation peut être accompagnée d'une conversion, par le module de conversion MC2, de la couleur des signaux optiques du flux reçu, de sorte que ledit flux puisse être transporté par le chemin CP ou sous-chemin SC auxiliaire auquel est raccordé le noeud hybride NO qui a reçu le flux.

Bien entendu, le dispositif D peut ne pas comporter de module de calcul de chemin MCC, lorsque celui-ci est implanté dans un autre noeud du réseau ou dans un serveur de gestion du réseau.

Par ailleurs, le dispositif D peut être implanté dans un serveur de gestion du réseau fonctionnant de façon centralisée. Dans ce cas, le module de traitement MT adresse un ordre de commutation au module de commutation MC1 implanté dans le noeud hybride NO concerné.

Le dispositif de contrôle D, et plus précisément ses modules de traitement MT et de calcul MCC, peuvent être réalisés sous la forme de circuits électroniques, de modules logiciels (ou informatiques), ou d'une combinaison de circuits et de logiciels.

L'invention peut être mise en oeuvre dans tous les types de réseaux optiques hybrides, et notamment dans les réseaux fibrés et les réseaux à commutation de longueurs d'onde ou de bandes de longueurs d'onde (comme par exemple les réseaux dits « à multiplexage par répartition (dense) de longueurs d'onde » (ou (D)WDM pour « (Dense) Wavelength Division Multiplexing »).

Grâce à l'invention, il est désormais possible de s'affranchir de la contrainte de continuité de couleur entre les lignes de transmission et les chemins ou sous-chemins de protection ou de restauration associés.

En outre, l'invention permet d'accroître notablement le taux d'utilisation des liaisons entre noeuds transparents puisqu'une conversion de couleur peut désormais permettre de les utiliser indépendamment de la couleur initiale des flux qui doivent les emprunter.

De plus, l'utilisation de noeuds hybrides présentant des fonctionnalités optoélectroniques (O/E/O) pour la commutation de protection ou de restauration permet de faciliter la détection de défaut et les procédures d'isolation de liaison. En effet, les noeuds ayant accès, via les interfaces O/E/O, à des signaux électriques qui peuvent être facilement contrôlés, ils peuvent détecter une dégradation ou une perte de signal plus facilement qu'un noeud transparent. C'est d'ailleurs la raison pour laquelle un noeud hybride placé à l'extrémité aval d'une ligne de transmission peut avantageusement adresser une information de signalisation de défaut au noeud hybride placé à l'extrémité amont de cette ligne de transmission.

L'invention ne se limite pas aux modes de réalisation de procédé, dispositif de contrôle D, et noeud hybride NO décrits ci-avant, seulement à titre d'exemple, mais elle englobe toutes les variantes que pourra envisager l'homme de l'art dans le cadre des revendications ci-après.

## Revendications

1. Procédé de contrôle de chemins auxiliaires (CP,SC) dans un réseau de communications optique de type hybride comportant une multiplicité de noeuds dits hybrides (NO, NT), raccordés entre eux par des lignes de transmission, **caractérisé en ce qu'**il consiste, en cas de défaut sur l'une desdites lignes de transmission, par laquelle passe une connexion, à déterminer au moins un chemin auxiliaire, indépendant de la couleur, entre les noeuds hybrides (NO) placés aux extrémités de ladite ligne de transmission défaillante et au sein desquels ladite connexion peut-être commutée selon un mode opaque, puis à commuter des signaux optiques empruntant ladite connexion vers ledit chemin auxiliaire, après une éventuelle conversion de couleur.

2. Procédé selon la revendication 1, **caractérisé en ce que** l'on procède à ladite commutation de signaux optiques à réception d'une information signalant ledit défaut sur ladite ligne de transmission.

3. Procédé selon la revendication 2, **caractérisé en ce que** ledit chemin auxiliaire est un chemin de restauration (SC) déterminé à réception de ladite information.

4. Procédé selon la revendication 3, **caractérisé en ce que** ledit chemin auxiliaire est un chemin de restauration (SC) au moins partiellement prédéterminé avant ladite réception de ladite information.

5. Procédé selon l'une des revendications 1 et 2, **caractérisé en ce que** ledit chemin auxiliaire est un chemin de protection (CP) précalculé, préétabli et préréservé.

6. Procédé selon l'une des revendications 3 à 5, **caractérisé en ce que** l'on détermine ou prédétermine ledit chemin auxiliaire (CP,SC) dans l'un au moins des deux noeuds hybrides (NO) placés aux extrémités de ladite ligne de transmission défaillante.

7. Dispositif (D) de contrôle de chemins auxiliaires (CP,SC) dans un réseau de communications optique de type hybride comportant une multiplicité de noeuds hybrides (NO, NT) comprenant des moyens de commutation (CM1) et des moyens de conversion de couleurs (CM2) et raccordés entre eux par des lignes de transmission (LT), **caractérisé en ce qu'**il comprend des moyens de traitement (MT) agencés, en cas de défaut sur l'une au moins desdites lignes de transmission par laquelle passe une connexion et aux extrémités de laquelle sont placés deux noeuds hybrides (NO) aptes à effectuer une commutation selon le mode opaque, pour ordonner auxdits moyens de commutation (CM1) de l'un au moins desdits deux noeuds hybrides qu'ils commutent les signaux optiques qui empruntent ladite connexion vers un chemin auxiliaire (CP,SC) choisi passant par lesdits noeuds (NO) et indépendant de la couleur, et après une éventuelle conversion de couleur desdits signaux optiques par lesdits moyens de conversion (CM2) associés.

8. Dispositif selon la revendication 7, **caractérisé en ce que** lesdits moyens de traitement (MT) sont agencés pour ordonner ladite commutation des signaux optiques à réception d'une information signalant le défaut sur ladite portion de connexion.

9. Dispositif selon la revendication 8, **caractérisé en ce qu'**il comprend des moyens de calcul (MCC) agencés pour déterminer ledit chemin auxiliaire (SC) à réception de ladite information, ce chemin auxiliaire déterminé étant alors dit chemin de restauration.

10. Dispositif selon la revendication 8, **caractérisé en ce que** ledit chemin auxiliaire étant un chemin de restauration (SC) au moins partiellement prédéterminé avant ladite réception de l'information, ledit dispositif (D) comprend des moyens de calcul (MCC) agencés pour terminer ladite détermination dudit chemin de restauration (SC).

11. Dispositif selon l'une des revendications 7 et 8, **caractérisé en ce que** ledit chemin auxiliaire est un chemin de protection (CP) précalculé, préétabli et préréservé.

12. Serveur de gestion pour un réseau de communications optique de type hybride, **caractérisé en ce qu'**il comprend un dispositif de contrôle (D) selon l'une des revendications 7 à 11.

13. Noeud hybride (NO) pour un réseau de communications optique de type hybride, **caractérisé en ce qu'**il comprend un module de commutation (MC1), un module de conversion de couleur (MC2) et un dispositif de contrôle (D) selon l'une des revendications 7 à 11.

14. Noeud hybride selon la revendication 13, **caractérisé en ce qu'**il comprend un module de régénération agencé de manière à régénérer chaque ressource optique reçue.

15. Réseau de communications optique de type hybride, **caractérisé en ce qu'**il comprend au moins deux noeuds hybrides (NO) selon l'une des revendications 13 et 14, placés aux extrémités opposées d'une ligne de transmission (LT) par laquelle passe une connexion.

16. Réseau de communications optique de type hybride, **caractérisé en ce qu'**il comprend au moins un serveur de gestion selon la revendication 12.

17. Utilisation des procédé, dispositif de contrôle (D), serveur de gestion et noeud hybride (NO) selon l'une des revendications précédentes dans des réseaux de communications optiques hybrides choisis parmi les réseaux à commutation de longueurs d'onde, les réseaux à commutation de bandes de longueurs d'onde et les réseaux fibrés.
